(19) Europäisches Patentamt / European Patent Office / Office européen des brevets

(11) **EP 2 271 113 A1**

(12) **EUROPEAN PATENT APPLICATION**
published in accordance with Art. 153(4) EPC

(43) Date of publication:
05.01.2011 Bulletin 2011/01

(51) Int Cl.:
*H04N 7/32* *(2006.01)*

(21) Application number: 09738875.5

(22) Date of filing: 30.04.2009

(86) International application number:
**PCT/JP2009/058513**

(87) International publication number:
**WO 2009/133938 (05.11.2009 Gazette 2009/45)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: 30.04.2008 JP 2008119151

(71) Applicant: **Kabushiki Kaisha Toshiba**
**Minato-ku**
**Tokyo 105-8001 (JP)**

(72) Inventors:
• **YASUDA, Goki**

  (JP)
• **CHUJOH, Takeshi**

  (JP)

(74) Representative: Maury, Richard Philip
Marks & Clerk LLP
90 Long Acre
London
WC2E 9RA (GB)

(54) **TIME-VARYING IMAGE ENCODING AND DECODING DEVICE**

(57) A video encoding apparatus includes a setting module to set a filter coefficient for use in filtering in a video decoding apparatus, and to set a rounding offset for controlling rounding of operation in the filtering process, and an encoder to output the filter coefficient and information of the rounding offset as encoded data.

F I G. 1

EP 2 271 113 A1

**Description**

Technical Field

The present invention relates to a video encoding apparatus for adding information for controlling a filtering process performed with a video decoding apparatus to encoded data, and a video decoding apparatus for performing a filtering process on a decoded image based on information for controlling the filtering process, which is added to encoded data-Background Art

As a technique to output an image obtained by filtering a decoded image, there is a technique by which an encoding apparatus designs a filter to minimize an error between an input image and an image provided by filtering the decoded image and transmits information of this filter, and a decoding apparatus outputs an image obtained by filtering the decoded image using the filter information (S.Wittmann and T.Wedi, "Post-filter SEI message for 4:4:4 coding", JVT of ISO/IEC MPEG&ITU-T VCEG, JVT-S030, April 2006 (referred to as Wittmann)). This allows the decoding apparatus to provide an output image of a small error with respect to the input image.

As a similar technique, there is considered a method of using an image obtained by filtering a decoded image as a reference image in generating a prediction image in addition to processing similar to Wittmann. This makes it possible to provide an effect to reduce a prediction error in predicting a next frame because an error between the reference image and the input image reduces.

The above technique causes a rounding error when filtering is done by integer division. Accordingly, in order to reduce an error between an input image and an image provided by a filtering process using the integer division, it is necessary to control rounding as well as a filter coefficient according to the image. However, the rounding based on round-off used broadly cannot be controlled according to the image.

As a technique to avoid accumulation of rounding errors in a filtering process, there is a technique of selecting round-up or round-down in the rounding for filtering (JP-A 11-69362 (KOKAI)). In this technique, the information designating round-up or round-down is transmitted from an encoding apparatus to a decoding apparatus. However, what can be selected is round-up or rounding-down only, and the rounding such as five or less rounding-down and six or more rounding-up cannot be done.

Disclosure of Invention

As described above, the prior art has a problem not to be able to control the rounding freely according to an image.

It is an object of the present invention to provide a video encoding/decoding apparatus which decreases an error between an input image and a reference image, and an error between the input image and an output image by controlling rounding freely according to an image.

An aspect of the present invention provides a video encoding apparatus comprising a setting module to set a filter coefficient for use in a filtering process in a video decoding apparatus, and set a rounding offset for controlling the rounding of operation in the filtering process, and an encoder to output information of the filter coefficient and the rounding offset as encoded data.

Another aspect of the present invention provides a video decoding apparatus comprising an information acquisition module to acquire information of a filter coefficient and a rounding offset from encoded data, a signal processor to generate a decoded image signal from the encoded data, a filter processor to filter a decoded image of the decoded image signal by using the filter coefficient and the rounding offset obtained from the encoded data.

Brief Description of Drawings

FIG. 1 is a block diagram illustrating a video encoding apparatus concerning the first embodiment.

FIG. 2 is a block diagram illustrating a signal processor of the video encoding apparatus concerning the first embodiment.

FIG. 3 is a flowchart illustrating an action of the video encoding apparatus concerning the first embodiment.

FIG. 4 is a block diagram illustrating a video decoding apparatus concerning the second embodiment.

FIG. 5 is a block diagram illustrating a signal processor of the video decoding apparatus concerning the second embodiment.

FIG. 6 is a flowchart illustrating an action of the video decoding apparatus concerning the second embodiment.

FIG. 7 is a block diagram illustrating a video encoding apparatus concerning the third embodiment.

FIG. 8 is a block diagram illustrating a video decoding apparatus concerning the fourth embodiment.

Best Mode for Carrying Out the Invention There will now be explained embodiments of the present invention.

(The first embodiment)

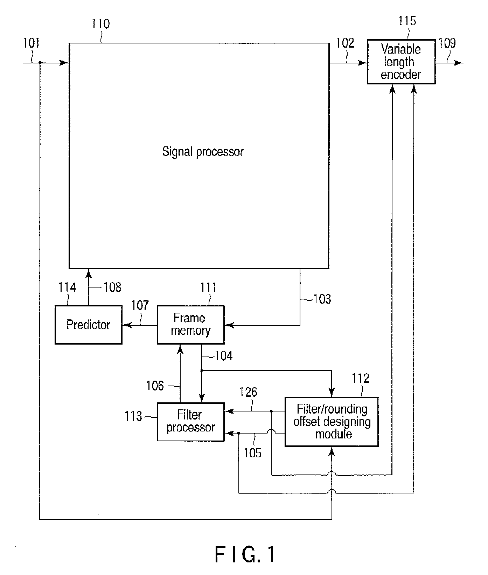

Configuration of a video encoding apparatus concerning the first embodiment will be described referring to FIG. 1. An input image signal 101 is input to a signal processor 110. The signal processor 110 receives a prediction image signal 108 from a predictor 114, calculates a residual signal between this prediction image signal 108 and the input image signal 101, and generates a residual information by transforming this residual signal into a coefficient. The signal processor 110 also generates a local decoded image signal 103 from the prediction image signal 108 and the residual signal. The local decoded image signal output terminal of the signal processor 110 is connected to a frame memory 111, and its residual information output terminal is connected to a variable length encoder 115. The frame memory 111 stores the local decoded image signal 103. The predictor 114 generates a prediction image signal from the image signal stored in the frame memory 111.

Concretely, the signal processor 110 comprises a subtracter 120, an orthogonal transformer 121, a quantizer 122, a dequantizer 123, an inverse orthogonal transformer 124 and an adder 125. The frame memory 111 is connected to a filter/rounding offset designing module 112 and a filter processor 113. The filter/rounding offset designing module 112 designs a filter coefficient and a rounding offset from the input image signal 101 and the local decoded image signal 104, and generates a filter coefficient 105 and a rounding offset 126. The filter processes 113 filters the local decoded image signal 104 using the filter coefficient 105 and the rounding offset 126, and generates an image signal 106.

The variable length encoder 115 performs variable length encoding on residual information 102, the filter coefficient 105 and the rounding offset 126, and outputs encoded data 109.

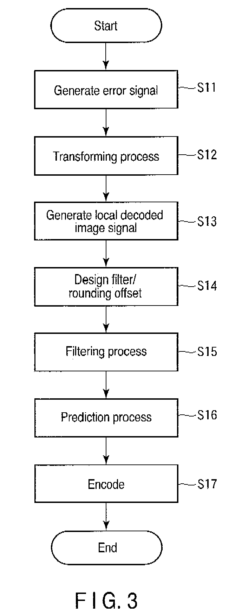

Action of the video encoding apparatus of the above configuration will be described referring to the flowchart of FIG. 3.

The input image signal 101 is input to the signal processor 110. The signal processor 110 generates an residual signal between a prediction image signal 108 and the input image signal 101 (S11), and generates the residual information (for example, DCT coefficient) 102 obtained by orthogonal-transforming the residual signal (S12). The local decoded image signal 103 is generated from the prediction image signal 108 and the residual signal and is output (S13). The residual information 102 is input to the variable length encoder 115, and the local decoded image signal 103 is stored in the frame memory 111.

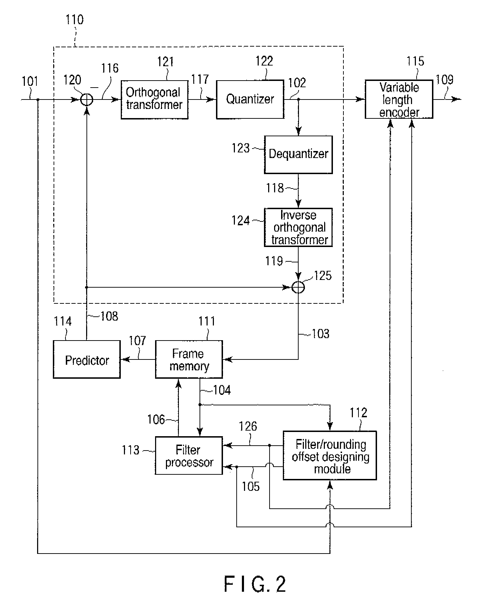

There will now be described an example of the signal processor 110 using FIG. 2. The input image signal 101 is input to the signal processor 110. The input image signal 101 is input to the subtracter 120. The subtracter 120 generates a residual signal by calculating a difference between the input image signal 101 and the prediction image signal 108. The orthogonal transformer 121 orthogonal-transforms the residual signal 116 and generate a transform coefficient 117. The quantizer 122 quantizes the transform coefficient 117. The quantized transform coefficient is input to the variable length encoder as residual information 102, on one hand, and is dequantized with the dequantizer 123 and then subjected to inverse orthogonal transform with the inverse orthogonal transformer 124, on the other hand. The adder 125 adds the reconstructed residual signal 119 and the prediction image signal 108, and generates the local decoded image signal 103. The local decoded image signal 103 is stored in the frame memory 111.

The local decoded image signal 104 read from the frame memory 111 is input to the filter/rounding offset designing module 112 and the filter processor 113. The filter/rounding offset designing module 112 designs a filter and a rounding offset from the input image signal 101 and the local decoded image signal 104 (S14). In other words, the filter/rounding offset designing module 112 sets a filter coefficient for use in a filtering process in the video decoding apparatus, and sets a rounding offset for controlling rounding of a filtering operation. The filter coefficient 105 and the rounding offset 126 are input to the filter processor 113 and the variable length encoder 115.

When the filter/rounding offset designing module 112 designs a filter, the filtering process is done.

In other words, the filter processor 113 filters the local decoded image signal 104 using the filter coefficient 105 and the rounding offset 126, and generates the image signal 106 (S15).

The image signal 106 is stored in the frame memory 111. The image signal stored in the frame memory 111 is read as a reference image signal 107, and input to the predictor 114. The predictor 114 predicts using the reference image signal 107, and generates the prediction image signal 108 (S16). The prediction image signal 108 is input to the signal processor 110. The variable length encoder 115 performs variable length encoding on the residual information 102, the filter coefficient 105 and the rounding offset 126, and generates encoded data 109 including those codes (S17).

The filter processor 113 carries out the filtering process according to the following equation.

$$S_{flt}(x,y) = \left( \sum_{i=-N}^{N} \sum_{j=-N}^{N} h_{ij}^{(int)} S(x+i, y+j) + \delta^{(int)} \right) / D \quad (1)$$

where $S_{flt}(x,y)$ is a pixel value of position $(x,y)$ of the image provided by the filtering process, $S(x,y)$ is a pixel value of position $(x,y)$ of the local decoded image, and N is a predetermined natural number.

$h_{ij}$(int), $\delta$(int), D is integer values, $h_{ij}$ (int) is the filter coefficient, $\delta$(int) is the rounding offset, and D is a predetermined value. A division is assumed to be an integer division.

The value set with the filter/rounding offset designing module 112 is input as $hi_j$(int), $\delta$(int).

The equation (1) means that the integer division is performed on a value obtained by adding the set rounding offset $\delta$(int) to the weighted sum of values of pixels located around a to-be-filtered pixel (x, y).

In addition, the filter coefficient $hi_j$(int) corresponds to the weight of the weighted sum.

In general, the filtering process is done using bit shift operation in terms of simple and easy of hardware realization and high-speed processing. When bit shift operation is used, assuming $D=2^n$, the following equation is used.

$$S_{flt}(x,y) = \left( \sum_{i=-N}^{N} \sum_{j=-N}^{N} h_{ij}^{(int)} S(x+i, y+j) + \delta^{(int)} \right) \gg n \quad (2)$$

The filter/rounding offset designing module 112 sets $hi_j$(int), $\delta$(int) so that an error between the image provided by filtering and the input image decreases.

For example, a square error in units of a frame can be used as the error.

$$\sum_{x \in X} \sum_{y \in Y} \left( S_{flt}(x,y) - S_{org}(x,y) \right)^2 \quad (3)$$

where $S_{org}(x,y)$ is a pixel of position $(x, y)$ of the input image, and X, Y are a set of x coordinate and y coordinate in each frame. A method for solving a Wiener-Hopf equation is known as a method for obtaining a filter coefficient for minimizing a square error. In the present embodiment, since there is a constraint that the filter coefficient $hi_j^{(int)}$ and the rounding offset $\delta^{(int)}$ are an integer value, the filter coefficient $hi_j^{(int)}$ and the rounding offset $\delta^{(int)}$ are obtained by an approximation procedure based on the above method. At first, the equation (1) is approximated to the following equation.

$$\tilde{S}_{flt}(x,y) = \sum_{i=-N}^{N} \sum_{j=-N}^{N} h_{ij} S(x+i, y+j) + \delta \quad (4)$$

where $hij$ corresponds to an approximate value of $hij^{(int)}/D$, and $\delta$ corresponds to an approximate value of $(\delta^{(int)} - D/2)$ /D. In addition, D/2 is a value for approximating the integer division to a floating-point divide.

When the equation (4) is used, $hi_j, \delta$ for minimizing a square error between the input image provided by the filtering process and the input image is obtained by solving an equation established by setting a value obtained by differentiating partially the equation (5) by $hij, \delta$ to 0.

$$\sum_{x \in X} \sum_{y \in Y} \left( \tilde{S}_{flt}(x,y) - S_{org}(x,y) \right)^2 \quad (5)$$

In other words, the equation on $hij, \delta$ may be solved.

$$\frac{\partial}{\partial h_{k\,l}}\left(\sum_{x\in X}\sum_{y\in Y}\left(\tilde{s}_{flt}(x,y)-s_{org}(x,y)\right)^2\right)=0 \quad (k=-N,\cdots,N,\, l=-N,\cdots,N)$$

$$(6)$$

$$\frac{\partial}{\partial\delta}\left(\sum_{x\in X}\sum_{y\in Y}\left(\tilde{s}_{flt}(x,y)-s_{org}(x,y)\right)^2\right)=0$$

$$(7)$$

Since hij is an approximate value of hij$^{(int)}$/D and $\delta$ corresponds to an approximate value of ($\delta^{(int)}$ - D/2)/D, the filter coefficient hij$^{(int)}$ and the rounding offset $\delta^{(int)}$ may be calculated according to the following equation, for example.

$$h_{i\,j}^{(int)}=\left\lfloor h_{i\,j}\times D+0.5\right\rfloor$$

$$(8)$$

$$\delta^{(int)}=\left\lfloor\delta\times D+0.5\right\rfloor_{+D/2}$$

$$(9)$$

hij$^{(int)}$ and $\delta^{(int)}$ are calculated in units of a frame by the above described method, and output as the filter coefficient 105 and the rounding offset 126.

In the present embodiment, since it is possible to control the rounding according to the image, an error between the output image provided with the video decoding apparatus and the input image can be decreased in comparison with a case of setting the rounding offset to a fixed value. Further, a prediction efficiency is improved because an error between the input image and the reference image can be decreased.

(The second embodiment)

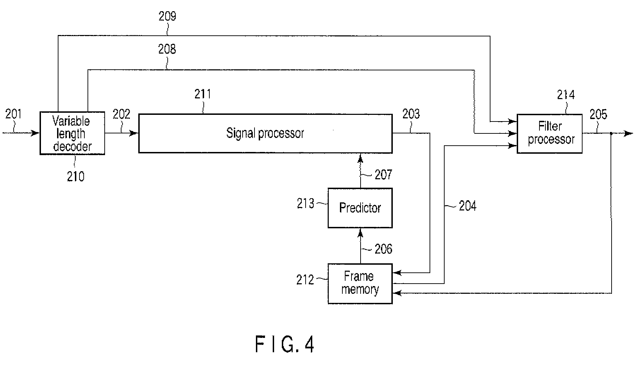

A video decoding apparatus concerning the second embodiment of the present invention will be described referring to FIG. 4. This video decoding apparatus comprises a variable length decoder 210, a signal processor 211, a frame memory 212, a predictor 213 and a filter processor 214. The variable length decoder 210 decodes encoded data 201, and outputs residual information 202, a filter coefficient 209 and a rounding offset 208. The signal processor 211 reproduces a residual based on residual information 202, and generates a decoded image signal 203 from this residual and a prediction image signal 207 from the predictor 213. The frame memory 212 stores the decoded image signal 203. The predictor 213 generates a prediction image signal 207 from the image signal stored in the frame memory 212.

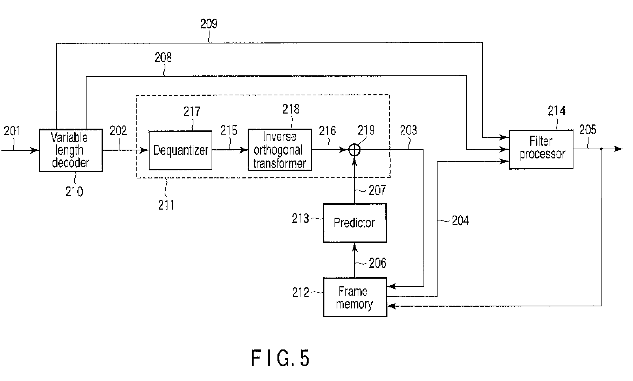

The signal processor 211 comprises a dequantizer 217, an inverse orthogonal transformer 218 and an adder 219 as shown in FIG. 5 concretely. The dequantizer 217 dequantizes the residual information 202 and generates a transform coefficient 215. The inverse orthogonal transformer 218 subjects the transform coefficient 215 to inverse orthogonal transform, and generates a residual signal 216. The adder 219 adds the prediction image signal 207 and the residual signal 216, and generates a decoded image signal 203.

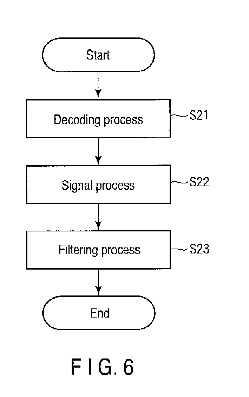

Action of the video encoding apparatus of the above configuration will be described referring to the flowchart of FIG. 6.

The encoded data 109 is output, as the encoded data 201 to be decoded, from the video encoding apparatus of FIG. 1 of the first embodiment, and is input to the variable length decoder 210 through a storage system or a transmission system. The encoded data 201 to be decoded includes codes of residual information, a filter coefficient, information of a rounding offset. The variable length encoder 210 decodes each of these codes and outputs residual information 202, a filter coefficient 209, and an offset 208 (S21). The residual information 202 is input to the signal processor 211, and the filter coefficient 209 and the rounding offset 208 are input to the filter processor 214. The signal processor 211 reproduces a residual based on the residual information 202, and generates the decoded image signal 203 from the prediction image signal 207 and the reproduced residual (S22).

There will now be described an example of the signal processor 211 referring to FIG. 4. It is assumed that the encoded data is generated with the encoding apparatus of the first embodiment that has the image signal processor 110 explained referring to FIG. 2. The transform coefficient quantized as the residual information 202 is input to the dequantizer 217. The quantized transform coefficient is dequantized with the dequantizer 217, and then subjected to inverse orthogonal transform with the inverse orthogonal transformer 218, whereby a residual signal 216 is generated.

The adder 219 adds the prediction image signal 207 to the residual signal 216, and provides the decoded image signal 203.

The decoded image signal 203 is stored in the frame memory 212, and the decoded image signal 204 read from the frame memory 212 is input to the filter processor 214. The filter processor 214 filters the decoded image signal 204 using the filter coefficient 209 and the rounding offset 208 similarly to the filter processor 113 of the first embodiment, and generates an image signal 205 (S23). The image signal 205 is stored in the frame memory 212, and output as an output image signal. The image signal stored in the frame memory 212 is read as a reference image signal 206, and input to the predictor 213. The predictor 213 predicts using the reference image signal 206 and generates the prediction image signal 207. The prediction image signal 207 is input to the signal processor 211.

In the present embodiment, since it is possible to control the rounding according to the image, an error between the input image encoded with the video encoding apparatus and the output image can be decreased in comparison with a case of setting the rounding offset to a fixed value. Further, prediction efficiency is improved because an error between the input image and the reference image can be decreased.


(The third embodiment)

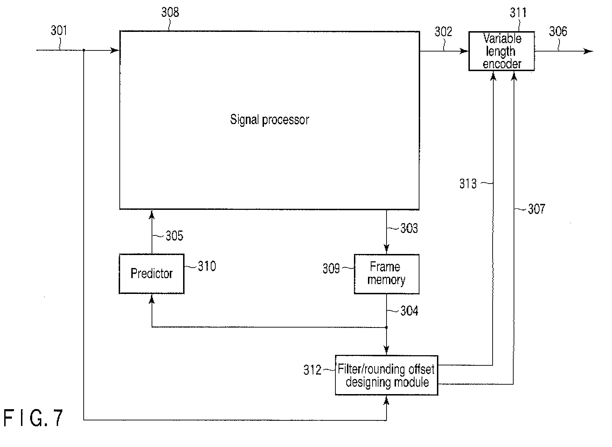

The third embodiment of the present invention will be described referring to FIG. 7. The basic configuration of the video encoding apparatus of the present embodiment is similar to the first embodiment. However, in the present embodiment, the filter processor 113 of FIG. 1 is not provided, and a predictor 310 generates a prediction image signal 305 using a local decoded image signal 303 as a reference image signal 304.

In other words, according to the video encoding apparatus of FIG. 7, when an input image signal 301 is input to a signal processor 308, the signal processor 308 generates a residual signal between the prediction image signal 305 and the input image signal 301, and generates residual information 302 by transforming the residual signal. Further, the signal processor 308 generates a local decoded image signal 303 from the prediction image signal 305 and the residual signal. The residual information 302 is input to the variable length encoder 311, and the local decoded image signal 303 is stored in the frame memory 309.

The local decoded image signal 303 stored in the frame memory 309 is input to the predictor 310 as a reference image signal 304, and to the filter/rounding offset designing module 312. The filter/rounding offset designing module 312 designs a filter and a rounding offset from the input image signal 301 and the local decoded image signal 304. At this time, the filter/rounding offset designing module 312 sets the filter coefficient and rounding offset so that an error between an image obtained by filtering a decoded image in the video decoding apparatus and the input image decreases. The operation of the filter/rounding offset designing module 312 may be done similarly to the filter/rounding offset designing module 112 of the first embodiment. The filter coefficient 307 and the rounding offset 313 are input to the variable length encoder 311, and are encoded.

In the present embodiment, since it is possible to control the rounding according to the image, an error between the output image provided with the video decoding apparatus and the input image can be decreased in comparison with a case of setting the rounding offset to a fixed value.


(The fourth embodiment)

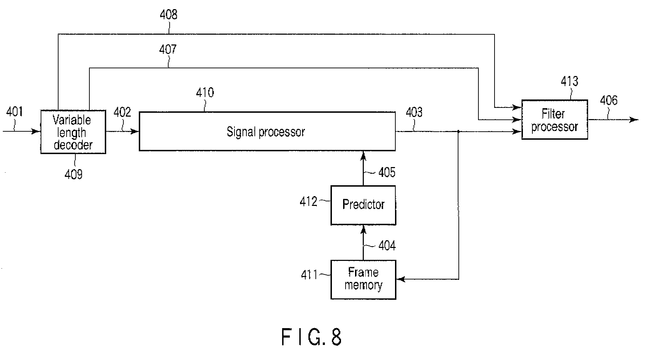

The fourth embodiment will be described referring to FIG. 8. The basic configuration of the video decoding apparatus of the present embodiment is similar to the second embodiment. However, the image signal 406 output from the filter processor 413 is not stored in the frame memory 411, and the predictor 412 generates a prediction image signal 405 using the decoded image signal 403 as a reference image signal 404.

In other words, according to the video decoding apparatus of FIG. 8, when the encoded data 401 is input to the variable length decoder 409, the variable length decoder 409 decodes the encoded data 401, and outputs residual information 402, a filter coefficient 408, and a rounding offset 407. The residual information 402 is input to the signal processor 410, and the filter coefficient 408 and the rounding offset 407 are input to the filter processor 413. The signal processor 410 reproduces a residual based on the residual information 402, and generates the decoded image signal 403 from the prediction image signal 405 of the predictor 412 and the reproduced residual. The decoded image signal 403 is stored in the frame memory 411. The decoded image signal 403 of the frame memory 411 is input to the predictor 412 as the reference image signal 404. The predictor 412 generates a prediction image signal 405 using this reference image signal 404.

In the present embodiment, since it is possible to control the rounding according to the image, an error between the input image encoded with the video encoding apparatus and the output image can be decreased in comparison with a case of setting the rounding offset to a fixed value.

According to the present invention, it is possible to decrease an error between the input image and the reference image, and an error between the input image and the output image, by controlling the rounding according to the image freely.

It is possible to make a computer execute the procedure described in the present embodiments. Alternatively, it is possible to distribute the procedure by storing it in a storing medium such as magnetic disks (flexible disk, hard disk, etc.), optical disks (CD-ROM, DVD, etc.), semiconductor memories as a program allowing a computer execute the procedure.

Industrial Applicability

The image encoding and decoding method and apparatus related to the present invention are employed for image compression processing in a communication media, a storage media and a broadcast media.

**Claims**

1. A video encoding apparatus comprising:

   a setting module to set a filter coefficient for use in a filtering process in a video decoding apparatus, and to set a rounding offset for controlling rounding of operation in the filtering process; and
   an encoder to output the filter coefficient and information of the rounding offset as encoded data.

2. The video encoding apparatus according to claim 1, further comprising:

   a signal processor to subject an input image signal and a prediction image signal to signal processing, and to generate a local decoded image;
   a filter processor to filter the local decoded image using the filter coefficient and the rounding offset that are set for the filtering process in the video decoding apparatus;
   an image storage to store an image provided by the filtering process as a reference image; and
   a predictor to generate a prediction image signal using the stored image.

3. The video encoding apparatus according to claim 2, wherein the filter processor carries out the filtering process by performing integer division on a value obtained by adding the rounding offset to a weighting sum of values of pixels located around a to-be-filtered pixel on the local decoded image.

4. The video encoding apparatus according to claim 3, wherein the signal processor generates residual information by performing signal processing on the input image signal and the prediction image signal, and the encoder outputs the encoded data by encoding the residual information together with the filter coefficient and the information of the rounding offset.

5. The video encoding apparatus according to claim 4, wherein the setting module sets the rounding offset so that an error between an image provided by the filtering process and the input image decreases.

6. The video encoding apparatus according to claim 5, wherein the setting module obtains the filter coefficient and the rounding offset using the input image signal and the local decoded signal.

7. The video decoding apparatus comprising:

   an information acquisition module to acquire information of a filter coefficient and a rounding offset from encoded data;
   a signal processor to generate a decoded image signal from the encoded data; and
   a filter processor to filter a decoded image of the decoded image signal using the filter coefficient and the rounding offset acquired from the encoded data.

8. The video decoding apparatus according to claim 7, comprising a storage to store the image obtained by the filtering process as a reference image, and a predictor to generate the prediction image signal using the stored image, wherein the signal processor generates the decoded image signal using the encoded data and the prediction image signal.

9. The video decoding apparatus according to claim 8, wherein the filter processor carries out the filtering process by performing integer division on a value obtained by adding the rounding offset to a weighting sum of values of pixels located around a to-be-filtered pixel on a decoded image.

F I G. 1

F I G. 2

Start

Generate error signal — S11

Transforming process — S12

Generate local decoded image signal — S13

Design filter/ rounding offset — S14

Filtering process — S15

Prediction process — S16

Encode — S17

End

F I G. 3

F I G. 4

F I G. 5

```
                    ┌─────────────┐
                    │    Start    │
                    └──────┬──────┘
                           │
                           ▼
              ┌──────────────────────┐
              │   Decoding process   │──── S21
              └──────────┬───────────┘
                         │
                         ▼
              ┌──────────────────────┐
              │    Signal process    │──── S22
              └──────────┬───────────┘
                         │
                         ▼
              ┌──────────────────────┐
              │   Filtering process  │──── S23
              └──────────┬───────────┘
                         │
                         ▼
                    ┌─────────────┐
                    │     End     │
                    └─────────────┘
```

F I G. 6

FIG. 7

F I G. 8

## INTERNATIONAL SEARCH REPORT

| International application No. |
| --- |
| PCT/JP2009/058513 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2006-135376 A (Toshiba Corp.),<br>25 May, 2006 (25.05.06),<br>Column 7, line 23 to column 11, line 36<br>& US 2006/0093039 A1 | 1<br>2-9 |
| Y | JP 2006-211152 A (National University<br>Corporation Hokkaido University),<br>10 August, 2006 (10.08.06),<br>Column 7, line 21 to column 8, line 1;<br>column 12, line 50 to column 13, line 10<br>(Family: none) | 2-9 |
| A | JP 11-069362 A (Hitachi, Ltd.),<br>09 March, 1999 (09.03.99),<br>Column 19, line 13 to column 20, line 13<br>& US 6295376 B1      & EP 1056294 A1 | 1-9 |

☐ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 June, 2009 (15.06.09) | 23 June, 2009 (23.06.09) |

| Name and mailing address of the ISA/<br>Japanese Patent Office | Authorized officer |
| --- | --- |
| Facsimile No. | Telephone No. |

Form PCT/ISA/210 (second sheet) (April 2007)

**INTERNATIONAL SEARCH REPORT**

International application No.

PCT/JP2009/058513

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
    The matters common to the inventions of claims 1 - 6 and 7 - 9 are "to set
a filter coefficient for a filter treatment in a motion picture decoding
device, and to set a rounding offset for controlling the rounding of operations
in said filter treatment", and "to output the information of said filter
coefficient and said rounding offset as encoded data".
    However, the search has revealed that a series of those means are not novel,
since they were disclosed in Document: JP 2006-135376 A (Toshiba Corp.),
25 May, 2006 (25.05.06), line 23, column 7 - line 36, column 11.
    (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2009/058513 |

Continuation of Box No.III of continuation of first sheet(2)

    As a result, the common matter is not the special technical feature within the meaning of PCT Rule 13.2, second sentence, since the aforementioned means makes no contribution over the prior art.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 11069362 A

**Non-patent literature cited in the description**

• **S.Wittmann ; T.Wedi.** Post-filter SEI message for 4:4:4 coding. *JVT of ISO/IEC MPEG&ITU-T VCEG, JVT-S030,* April 2006